# EUROPEAN PATENT SPECIFICATION

(11) **EP 2 590 808 B1**
(45) Date of publication and mention of the grant of the patent: **21.01.2015**
(21) Application number: 11724646.2
(22) Date of filing: 14.06.2011
(51) Int. Cl.: B29D 11/00, B29C 45/14

(54) **A METHOD OF MANUFACTURING AN OPHTHALMIC LENS FOR PROVIDING AN OPTICAL DISPLAY**
VERFAHREN ZUR HERSTELLUNG EINES BRILLENGLASES ZUR BEREITSTELLUNG EINER OPTISCHEN ANZEIGE
PROCÉDÉ DE FABRICATION D'UNE LENTILLE OPHTALMOLOGIQUE POUR PRODUIRE UN AFFICHAGE OPTIQUE

(30) Priority: 05.07.2010 EP 10305731
(43) Date of publication of application: 15.05.2013
(73) Proprietor: Essilor International (Compagnie Générale d'Optique), 94220 Charenton-le-Pont (FR)
(72) Inventor: BUCHON, Cédric, F-94220 Charenton-le-Pont (FR); GELLY, Gérard, F-94220 Charenton-le-Pont (FR); HABASSI, Chéfik, F-94220 Charenton-le-Pont (FR); MARTIN, Gérard, F-94220 Charenton-le-Pont (FR); ROPTIN, Vincent, F-94220 Charenton-le-Pont (FR); VIDEMANN, Antoine, F-94220 Charenton-le-Pont (FR)
(74) Representative: Lenne, Laurence
(86) International application number: PCT/EP2011/059789
(87) International publication number: WO 2012/004090

(56) References cited:
- EP-A2- 0 368 817
- US-A- 4 795 667
- US-A1- 2001 033 401
- US-A1- 2008 273 246

## Description

The present invention relates to a method of manufacturing an ophthalmic lens for making an optical display by means of an optical imager designed to allow information of the image or multimedia type to be viewed. The term "lens" is used herein to designate an optical system suitable in particular for being positioned in a frame for spectacles or eyeglasses.

This term "lens" is used to mean a finished lens ready for placing on a spectacles frame, or an unfinished lens or lens blank, i.e. that still needs to be subjected to at least one treatment, e.g. surfacing, in order to be usable.

The document WO 2006/016086 discloses a method of manufacturing a vision-correction lens 1 as represented in figure 1, that has a front face 1A and a rear face 1B, and into which light beams coming from a micro display 5 and emitted by an optical element of a light beam generator system 2 are introduced via an entry surface 3 and directed towards the eye of the wearer to enable information content to be viewed. The light beams are reflected a plurality of times between two reflection faces, between being introduced into the lens and exiting therefrom, these two reflection faces being faces of a transparent optical insert constituted by a light guide 4. According to this known method, the insert 4 is completely contained within the lens 1.

With this method of manufacturing an ophthalmic display, the vision of a user can be corrected, while being mass-produced in reliable manner, with this being achieved by decoupling the display and the vision-correction functions.

The entry surface 3 is formed by making a molded cavity in the lens, and it constitutes the bottom of the cavity. The cavity is molded by means of a stud secured to a mold portion, and in the insert 4 is temporarily secured to this stud prior to molding. Once the lens is manufactured, the light beam generator system 2 is then placed on this entry surface 3.

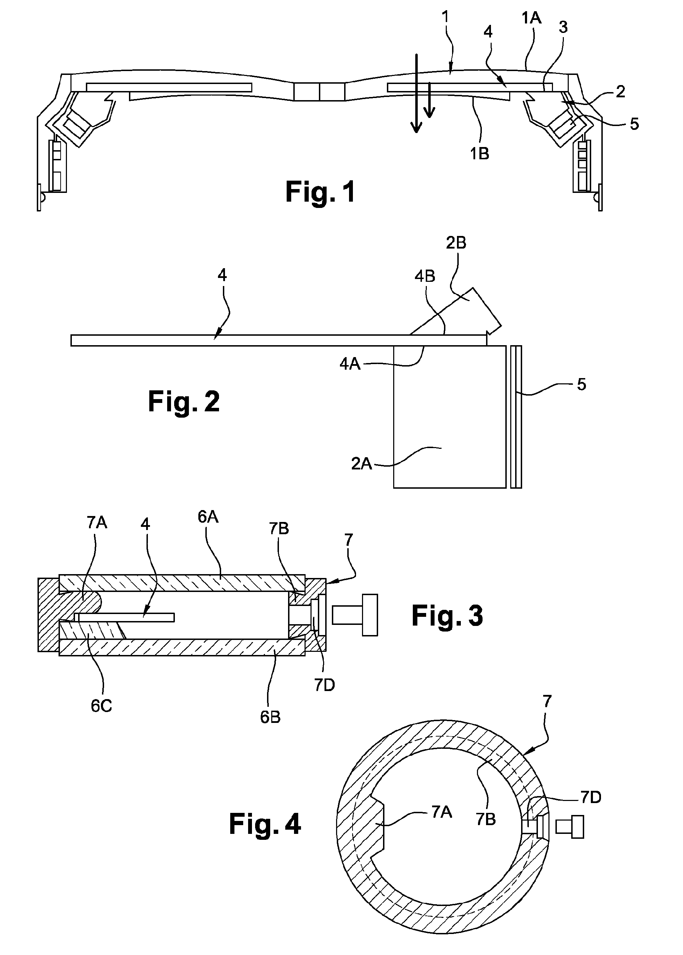

Other solutions propose such lens for making an optical display with complex light beam generator system formed by two optical pieces as represented in figure 2.

The first beam generator piece 2A is placed and stuck on the rear face of the light guide 4 and the second optical piece 2B is placed and stuck on the front face of the light guide 4. Such arrangement results in a beam generator system having a smaller volume and a repartition around the lens.

The object of the invention is to propose a method of manufacturing an ophthalmic lens relating to this arrangement with two beam generator pieces.

The invention proposes a method of manufacturing an ophthalmic lens according to claim 1.

The invention is described below in greater detail with the help of figures that show merely a preferred embodiment of the invention.
Figure 1 is a section view of a display including a lens, according to first prior art.
Figure 2 is a section view of a display including a lens, according to second prior art.
Figure 3 is a section view showing the method in accordance with the invention for manufacturing the lens according to second prior art.
Figure 4 is upside view of a detail of a mold used in the manufacturing method of the invention.

As represented in figure 2, the invention concerns a method of manufacturing an ophthalmic lens 1, that has a front face 1A and a rear face 1B, and into which light beams emitted by an optical element of a light beam generator system 2A, 2B are introduced and directed towards the eye of the wearer to enable information content to be viewed by means of a transparent light guide 4. The light beam generator system is constituted by two optical pieces, a first beam generator piece 2A placed on a first entry surface 4A of the rear face of the lens and a second optical piece 2B placed on a second entry surface 4B of the front face of the lens.

As represented in figure 3, the mold for manufacturing the lens essentially comprises two mold portions, a first mold portion 6A for molding the front face of the blank lens, and a second mold portion 6B for molding the rear face of the blank lens.

The method consists in molding the lens 1 between this first mold portion 6A and this second mold portion 6B.

The first entry surface 4A is formed by making in the lens a molded cavity by means of a stud 6C secured to the second mold portion 6B, and the light guide 4 is temporarily secured to the stud 6C prior to molding.

The second entry surface 4B is formed by making in the lens a molded cavity by means of a mold part 7A which is part of a peripheral cylindrical element 7, the first mold portion 6A being placed above this peripheral cylindrical element 7 and the space between the first mold portion 6A and the second mold portion 6B being closed by this peripheral cylindrical element 7.

The first entry surface 4A through which the light beams emitted by the optical element of the first light beam generation piece 2A are introduced is formed by making a molded cavity in the lens, with the surface constituting the bottom of the cavity.

This cavity is molded by means of the stud 6C secured to the second mold portion 6B, and preferably integral therewith, and the light guide 4 is secured temporarily on the stud by adhesive prior to molding. The stud 6C is placed on a side edge of the second portion 6B.

The surface of the stud 6C that is to receive the light guide 4 is coated with adhesive, advantageously MR8UV, (organic resin cured by UV and called "Mitsui Resin 8UV"), and the light guide is positioned on the stud 6C by an appropriate tool as a function of the marking provided on the mold. The light guide is pressed against a stud and held until the adhesive has polymerized. When using MR8 ("Mitsui Resin 8"), it is initiated with a particular photoinitiator that enables polymerization to take place quickly under UV radiation.

Most advantageously, the light guide 4 is secured temporarily to the stud 6C prior to molding by means of a layer of the monomer constituting the lens 1. As a result, the thin layer of monomer serving to bond the light guide then acts after unmolding as a thin layer covering the light guide at the entry surface 4A and presenting the same refractive index as the remainder of the lens 4.

The mold portions 6A, 6B may be made of metal, e.g. of X15 steel coated with a TiCN treatment to allow disassembly.

They may be of thermoplastic organic material, preferably of a material that does not adhere to the monomer resin used, e.g. polypropylene or TPX.

They may be of inorganic material with a coating constituted for example by a top coat or by an unmolding agent that can be added to the polymerizable resin constituting the lens 1.

By way of example, the monomer used for molding the lens 1 may be MR6.

The two mold portions 6A or 6B may be plane or curved depending on whether it is desired to manufacture a finished lens ready for positioning in a frame, or a lens blank as illustrated, i.e. that needs to be subjected to at least one further treatment, e.g. surfacing, in order to be usable.

According to the invention, the peripheral cylindrical element 7 which is represented alone on figure 4, is made of deformable material, preferably rubber, and is compressed between the two mold portions 6A or 6B, once the light guide 4 has been secured to the stud 6C. It comprises on its whole internal periphery a compression rib 7B of trapezoidal form which assures the sealing of the two mold portions 6A or 6B. It comprises an opening 7D which can be closed and is used for filling with monomer the space between the first mold portion 6A and the second mold portion 6B and forming with these portions a mold for molding the lens.

At a location opposite to this filling opening 7D, the compression rib is extending towards the interior of the mold, in order to form the mold part 7A which has a section in form of L, a branch of the L being placed on the stud 6C and other branch of the L being placed on the light guide 4.

Once the light guide has been secured to the stud and the peripheral cylindrical element 7 has been placed, the stud 6C and the mold part 7A being symmetric relating to a transverse plane and superposed together with a common plane of symmetry, the mold arrangement is closed by the first mold portion 6A, a monomer is cast and polymerized by heating the mold and a lens is obtained.

The front face 1A of the lens and the rear face 1B of the lens are then surfaced, after removing of mold parts.

This manufactured lens 1 can then be equipped with the first and second beam generator pieces 2A, 2B.

## Claims

1. A method of manufacturing an ophthalmic lens (1), that has a front face (1A) and a rear face (1B), and into which light beams emitted by an optical element of a light beam generator system are introduced and directed towards the eye of the wearer to enable information content to be viewed by means of a transparent light guide (4), said light beam generator system being constituted by two optical pieces, a first optical piece (2A) placed on a first entry surface (4A) of the rear face of the lens and a second optical piece (2B) placed on a second entry surface (4B) of the front face of the lens, method consisting in molding the lens (1) between a first mold portion (6A) and a second mold portion (6B) wherein
- the first entry surface (4A) is formed by making in the lens a molded cavity by means of a stud (6C) secured to the second mold portion (6B), and that the light guide (4) is temporarily secured to said stud (6C) prior to molding;
**characterized in that**
- the second entry surface (4B) is formed by making in the lens a molded cavity by means of a mold part (7A) which is part of a peripheral cylindrical element (7), the first mold portion (6A) being placed above this peripheral cylindrical element (7) and the space between the first mold portion 6A and the second mold portion (6B) being closed by this peripheral cylindrical element (7).

2. A method according to claim 1, **characterized in that** said peripheral cylindrical element (7) with said mold part (7A) is made of deformable material, preferably of rubber.

3. A method according to one of preceding claims, **characterized in that** said mold part (7A) has a section in form of L, a branch of the L being placed on said stud (6C) and other branch of the L being place on the light guide (4).

4. A method according to one of preceding claims, **characterized in that** said stud (6C) and said mold part (7A) are symmetric relating to a transverse plane and superposed together with a common plane of symmetry.

## Patentansprüche

1. Verfahren zur Herstellung eines Brillenglases (1), das eine Vorderseite (1A) und eine Rückseite (1B) aufweist und in das von einem optischen Element eines Lichtstrahlerzeugungssystems emittierte Lichtstrahlen eingeleitet und zum Auge des Trägers gerichtet werden, um zu ermöglichen, Informationsinhalte mittels eines transparenten Lichtleiters (4) zu betrachten, wobei das Lichtstrahlerzeugungssystem aus zwei optischen Teilen besteht, einem ersten optischen Teil (2A), platziert auf einer ersten Eintrittsoberfläche (4A) auf der Rückseite des Glases, und einem zweiten optischen Teil (2B), platziert auf einer zweiten Eintrittsoberfläche (4B) auf der Vorderseite des Glases, wobei das Verfahren im Gießen des Glases (1) zwischen einem ersten Gussformteil (6A) und einem zweiten Gussformteil (6B) besteht, wobei
- die erste Eintrittsoberfläche (4A) durch Erstellen einer Gussaushöhlung in dem Glas mittels eines an dem zweiten Gussformteil (6B) befestigten Ständers (6C) geformt wird, und dass der Lichtleiter (4) vor dem Gießen zeitweise an dem Ständer (6C) befestigt ist;
**dadurch gekennzeichnet, dass**
- die zweite Eintrittsoberfläche (4B) durch Erstellen einer gegossenen Aushöhlung in dem Glas mittels eines Gussformstücks (7A) geformt wird, das Teil eines peripheren zylindrischen Elements (7) ist, wobei das erste Gussformteil (6A) über diesem peripheren zylindrischen Element (7) platziert wird und der Raum zwischen dem ersten Gussformteil (6A) und dem zweiten Gussformteil (6B) durch dieses periphere zylindrische Element (7) geschlossen wird.

2. Verfahren nach Anspruch 1, **dadurch gekennzeichnet, dass** das periphere zylindrische Element (7) mit dem Gussformstück (7A) aus deformierbarem Material besteht, vorzugsweise aus Gummi.

3. Verfahren nach einem der vorhergehenden Ansprüche, **dadurch gekennzeichnet, dass** das Gussformstück (7A) einen Abschnitt in der Form eines Ls aufweist, wobei ein Zweig des Ls auf dem Ständer (6C) platziert wird und der andere Zweig des Ls auf dem Lichtleiter (4) platziert wird.

4. Verfahren nach einem der vorhergehenden Ansprüche, **dadurch gekennzeichnet, dass** der Ständer (6C) und das Gussformstück (7A) bezüglich einer Transversalebene symmetrisch sind und mit einer gemeinsamen Symmetrieebene übereinander angeordnet sind.

## Revendications

1. Procédé de fabrication d'une lentille ophtalmique (1), qui a une face avant (1A) et une face arrière (1B), et dans laquelle des faisceaux de lumière émis par un élément optique d'un système générateur de faisceaux de lumière sont introduits et dirigés vers 1'Teil du porteur pour permettre à un contenu informatif d'être visualisé au moyen d'un guide de lumière transparent (4), ledit système générateur de faisceaux de lumière étant constitué de deux pièces optiques, une première pièce optique (2A) placée sur une première surface d'entrée (4A) de la face arrière de la lentille et une deuxième pièce optique (2B) placée sur une deuxième surface d'entrée (4B) de la face avant de la lentille, le procédé consistant à mouler la lentille (1) entre une première partie de moule (6A) et une deuxième partie de moule (6B), dans lequel
- la première surface d'entrée (4A) est formée en fabriquant dans la lentille une cavité moulée au moyen d'un goujon (6C) fixé à la deuxième partie de moule (6B), et le guide de lumière (4) est temporairement fixé audit goujon (6C) avant moulage ;
**caractérisé en ce que**
- la deuxième surface d'entrée (4B) est formée en fabriquant dans la lentille une cavité moulée au moyen d'une partie de moule (7A) qui fait partie d'un élément cylindrique périphérique (7), la première partie de moule (6A) étant placée au-dessus de cet élément cylindrique périphérique (7) et l'espace entre la première partie de moule (6A) et la deuxième partie de moule (6B) étant fermé par cet élément cylindrique périphérique (7).

2. Procédé selon la revendication 1, **caractérisé en ce que** ledit élément cylindrique périphérique (7) avec ladite partie de moule (7A) est constitué d'un matériau déformable, de préférence de caoutchouc.

3. Procédé selon l'une des revendications précédentes, **caractérisé en ce que** ladite partie de moule (7A) a une section en forme de L, une branche du L étant placée sur ledit goujon (6C) et l'autre branche du L étant placée sur le guide de lumière (4).

4. Procédé selon l'une des revendications précédentes, **caractérisé en ce que** ledit goujon (6C) et ladite partie de moule (7A) sont symétriques par rapport à un plan transversal et superposés avec un plan de symétrie commun.
